# EUROPEAN PATENT SPECIFICATION

(11) **EP 0 818 835 B1**
(45) Date of publication and mention of the grant of the patent: **27.02.2002**
(21) Application number: 97111197.6
(22) Date of filing: 03.07.1997
(51) Int. Cl.: H01M 2/10, H01M 2/20, H01M 10/46, B60K 1/04

(54) **Discharging/charging structure for battery mounted on motor-assisted bicycle**
Ent/Aufladungsaufbau für Batterie, die an ein Fahrrad mit Hilfsmotor befestigt ist
Dispositif pour la charge/décharge d'une batterie montée sur une bicyclette avec moteur auxiliaire

(30) Priority: 10.07.1996 JP 18027996
(43) Date of publication of application: 14.01.1998
(73) Proprietor: HONDA GIKEN KOGYO KABUSHIKI KAISHA, Minato-ku Tokyo (JP)
(72) Inventor: Toriyama, Masayuki, 4-1 Chuo 1-Chome, Wako-shi, Saitama (JP); Kawaguchi, Kenji, 4-1 Chuo 1-Chome, Wako-shi, Saitama (JP); Shibata, Kazumi, 4-1 Chuo 1-Chome, Wako-shi, Saitama (JP)
(74) Representative: Liska, Horst, Dr.-Ing.

(56) References cited:
- US-A- 5 525 888
- PATENT ABSTRACTS OF JAPAN vol. 013, no. 356 (E-803), 9 August 1989 & JP 01 117267 A (YAMAHA MOTOR CO LTD), 10 May 1989

## Description

### Technical Field of the Invention

The present invention relates to a discharging/charging structure comprising a battery, a battery containing case and a charger, said battery removably mounted on a motor-assisted bicycle, wherein the battery includes discharging contacts used for feeding a current to an electric motor and charging contacts used for charging said battery by said charger.

### Related Art

The battery for a motor-assisted bicycle of this type has been known, for example, from Japanese Patent Laid-open No. Hei 5-319104.

### Problem to be Solved by the Invention

The above-described related art battery, however, has a disadvantage. When the battery removed from a motor-assisted bicycle is charged by a charger, a connector provided at a leading end of a cord extending from the charger is connected to the battery. Such connection of the connector to the battery takes a lot of labor. Also, upon charging of the battery, the relatively large sized battery, charger, and cords take up relatively large spaces. As a result, the charging work must be performed at a relatively broaden location.

In view of the foregoing, the present invention has been made, and an object of the present invention is to provide a discharging/charging structure for a battery removably mounted on a motor-assisted bicycle, which is capable of making easy electric connection when the relatively large sized battery is mounted on the motor-assisted bicycle, and of easily charging the battery removed from the motor-assisted bicycle at a relatively narrow location.

### Means for Solving the Problem

To achieve the above object, according to an invention described in claim 1, there is provided a discharging/charging structure comprising a battery, a battery containing case and a charger, said battery removably mounted on a motor-assisted bicycle, the battery including discharging contacts used for feeding a current to an electric motor and charging contacts used for charging the battery by a charger, characterized in that said battery containing case for insertably/removably containing a battery in the vertical direction is provided on the motor-assisted bicycle; discharging terminals are provided on the battery containing case in such a manner as to be brought in contact with the discharging contacts disposed on the battery by the dead weight of the battery, the discharging contacts facing downward; charging contacts are provided on the battery, the charging contacts facing in the direction different from the facing direction of the discharging contacts; the charger is configured to insertably/removably mount the battery in the same direction as that along which the battery is insertably/removably contained in the battery containing case; and charging terminals making electric contact with the charging contacts when the battery is mounted in the charger, are provided on the charger.

### Effect of the Invention

Accordingly, the discharging terminals are effectively connected to the discharging contacts when the battery is contained in the battery containing case. Also, the battery can be charged at a relatively narrow location at a high workability by connecting the charging terminals to the charging contacts simultaneously with mounting of the battery in the charger. Further, since the'charging terminals of the charger are prevented from being applied with the weight of a relatively heavy battery, it is possible to reduce the size and weight of the charging terminals. On the other hand, when the battery is mounted on a vehicular body, the connection between the discharging contacts and discharging terminals can be stably kept by the dead weight of the battery, and thereby it can be prevented from being affected by vibration of the body during running.

According to an invention described in claim 2, in addition to the configuration of the invention described in claim 1, a residual power indicator is provided on an upper surface of the battery.

As a result, it is possible to easily confirm the residual power of the battery upon discharging and charging.

According to an invention described in claim 3, in addition to the configuration of the invention described in claim 2, a push button for operating the residual power indicator is disposed on the residual power indicator with the operating direction of the push button taken as the vertical direction.

As a result, when the residual power is indicated on the residual power indicator by operation of the push button, the discharging terminals and discharging contacts, and charging terminals and charging contacts are not prevented from being applied with forces in the direction where the contacts therebetween are released, so that it is possible to certainly keep preferable discharging and charging states.

### Embodiments of the Invention

Hereinafter, embodiments of the present invention will be described with reference to the accompanying drawings.

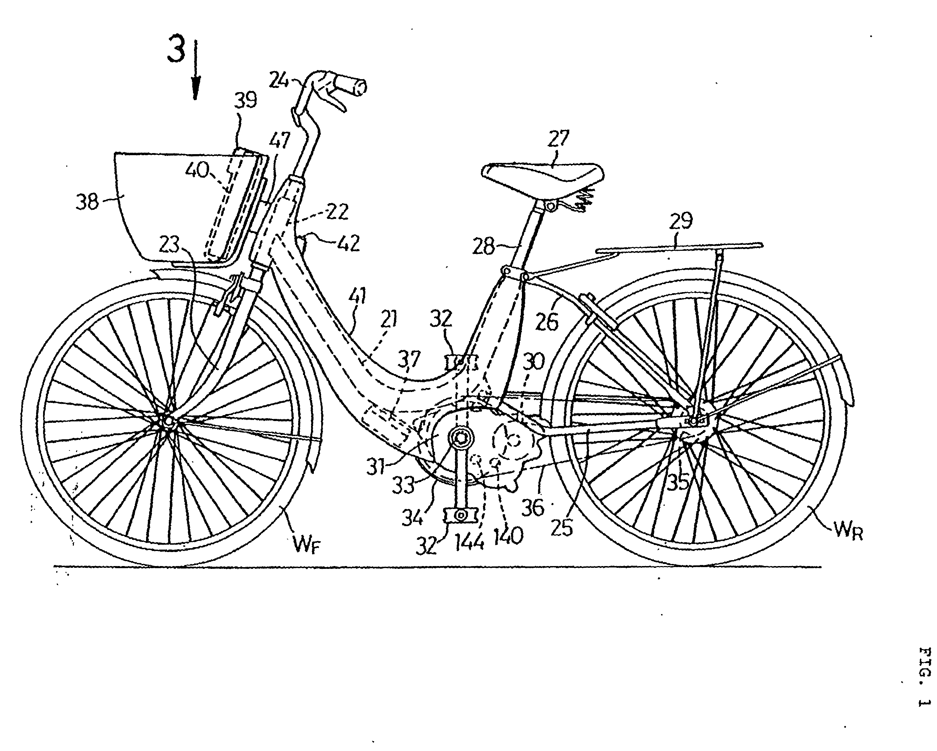

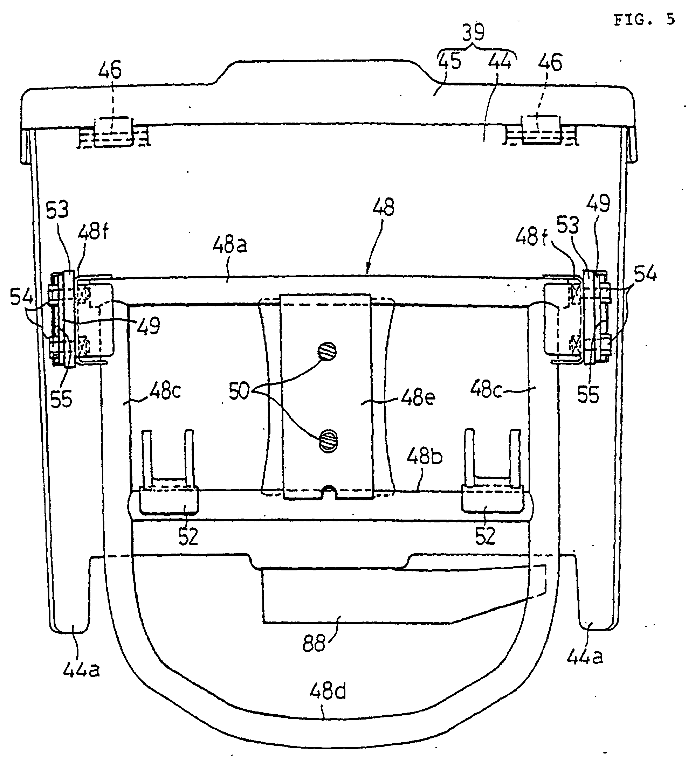

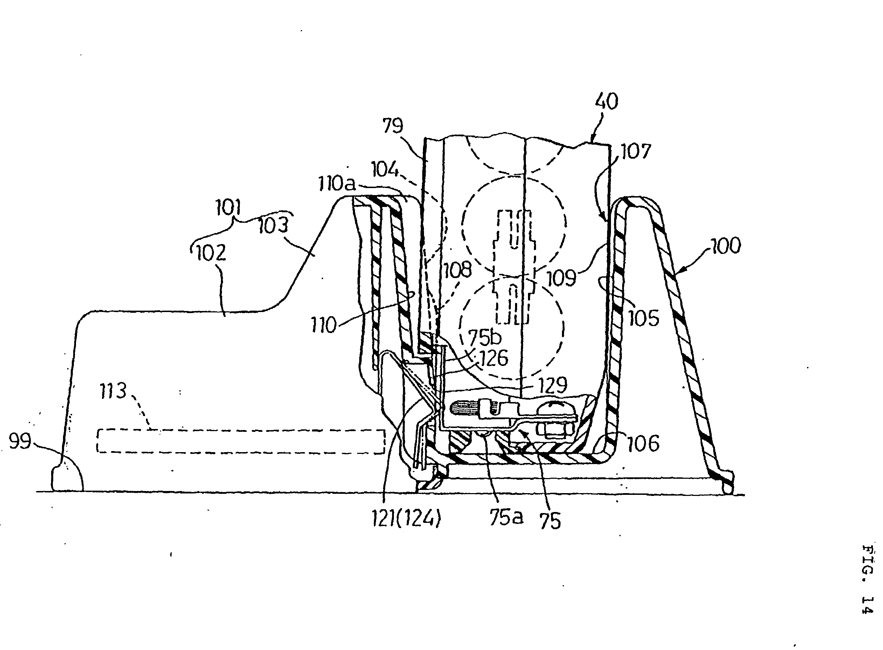

Figs. 1 to 18 show embodiments of the present invention.

### Brief Description of the Drawings

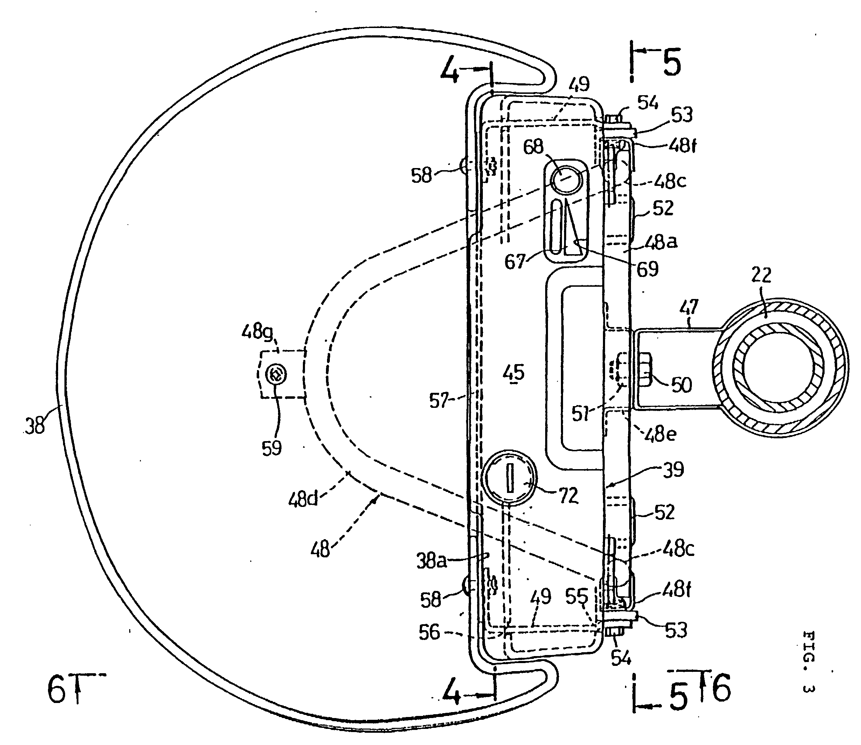

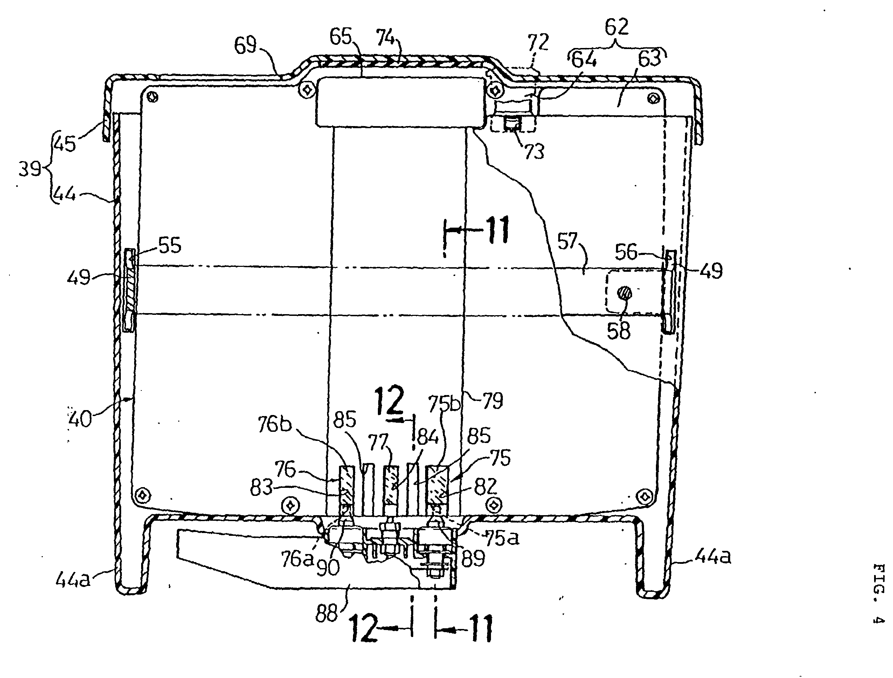

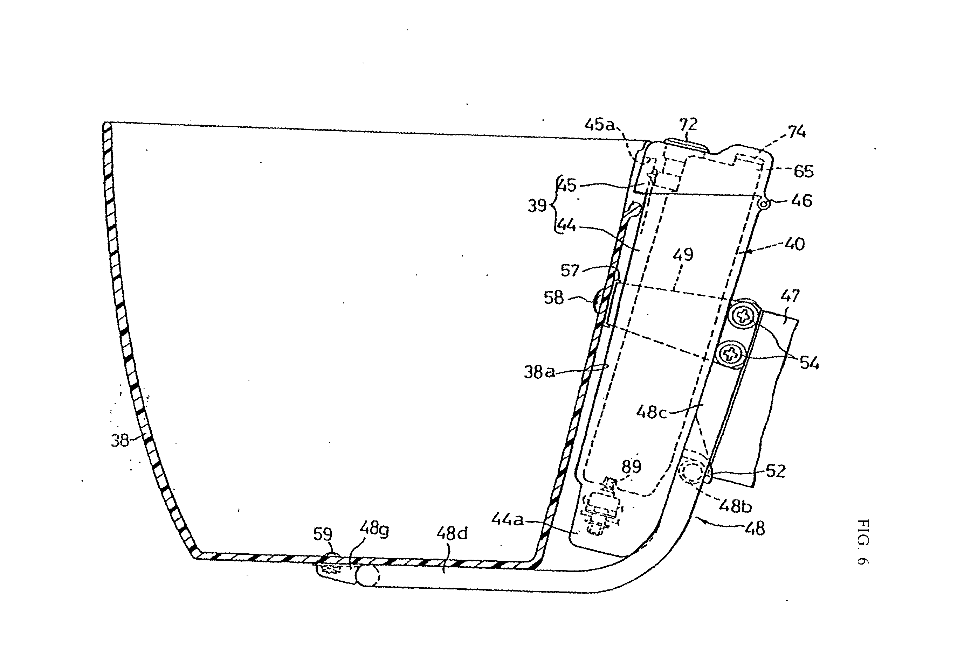

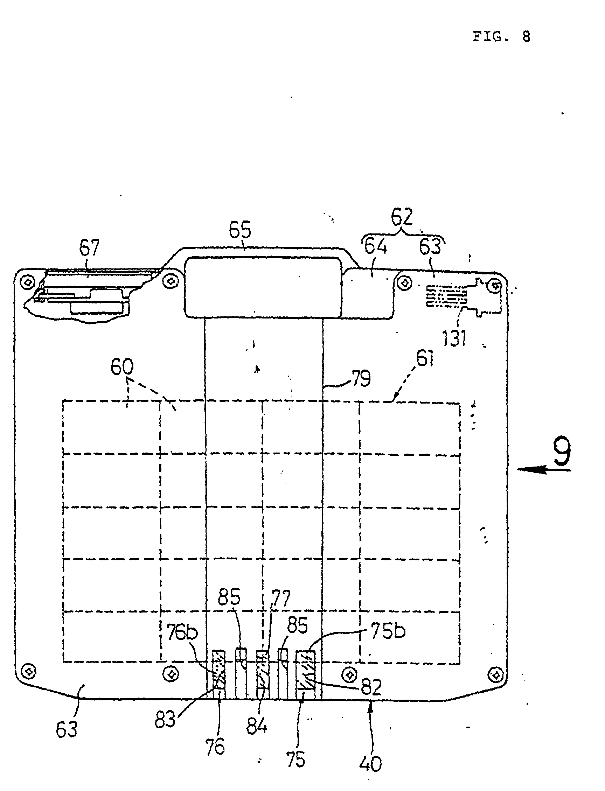

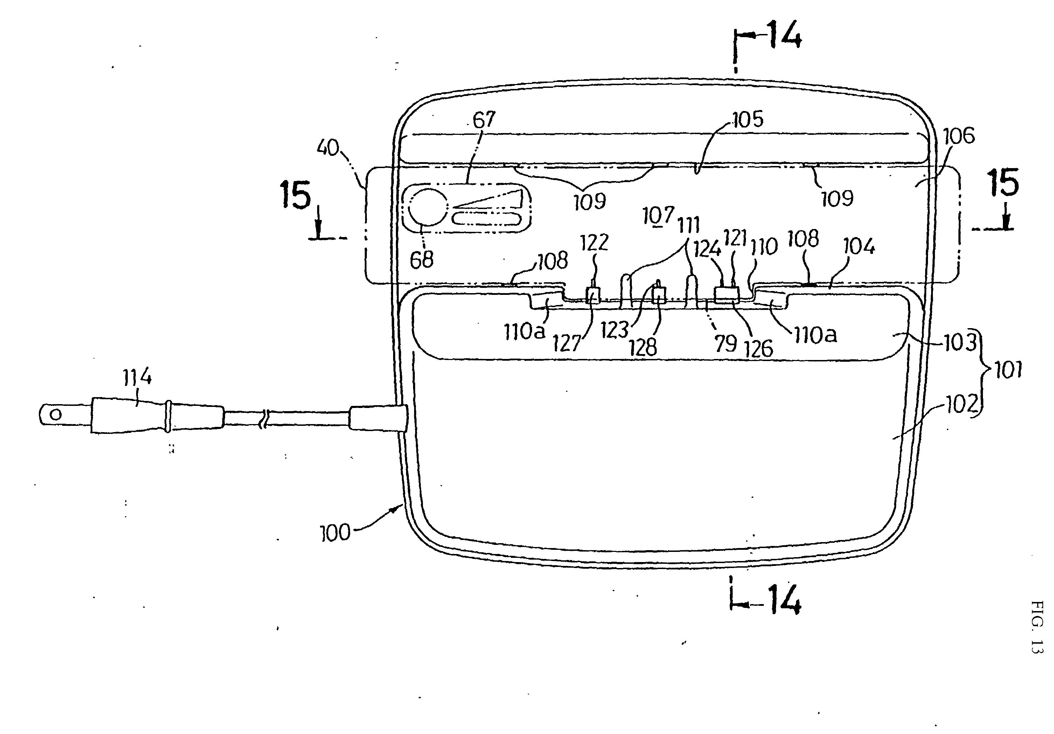

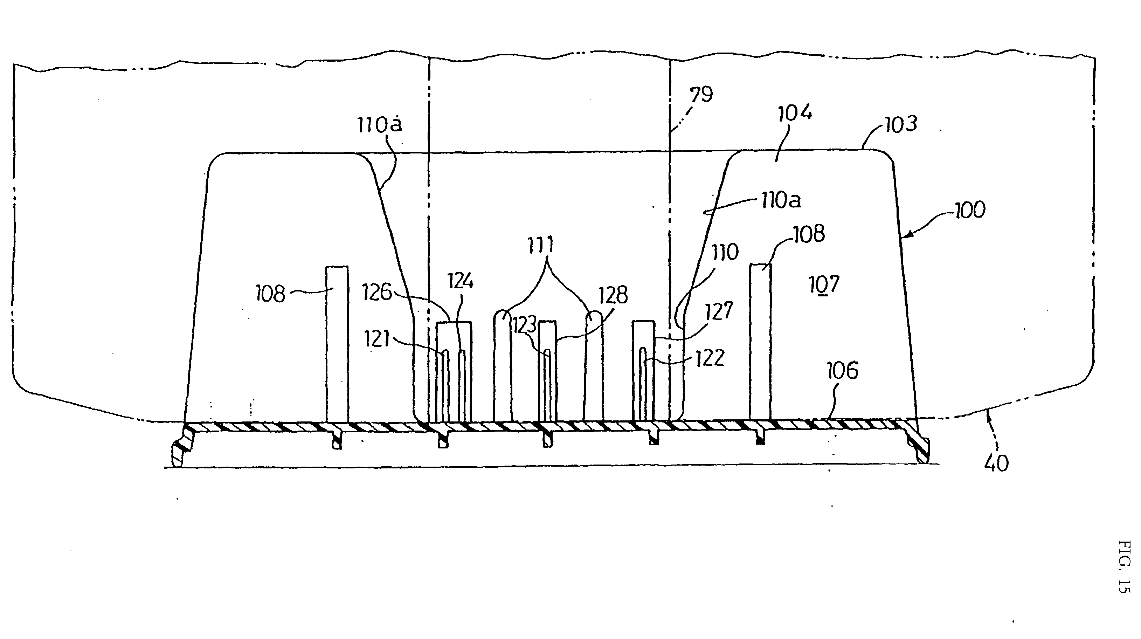

Fig. 1:
   A side view of a motor-assisted bicycle.
Fig. 2:
   An enlarged vertical sectional side view of a motor unit.
Fig. 3:
   A plan view seen from an arrow 3 of Fig. 1.
Fig. 4:
   A sectional view taken on line 4-4 of Fig. 3.
Fig. 5:
   A sectional view taken on line 5-5 of Fig. 3.
Fig. 6:
   A sectional view taken on line 6-6 of Fig. 3.
Fig. 7:
   A sectional view, similar to Fig. 6, showing a state in which a battery containing case is opened.
Fig. 8:
   A front view of a battery.
Fig. 9:
   A side view seen from an arrow 9 of Fig. 8.
Fig. 10:
   A schematic view showing an internal configuration of the battery.
Fig. 11:
   A sectional view taken on line 11-11 of Fig. 4.
Fig. 12:
   A sectional view taken on line 12-12 of Fig. 4.
Fig. 13:
   A plan view of a charger.
Fig. 14:
   A sectional view taken on line 14-14 of Fig. 13.
Fig. 15:
   A sectional view taken on line 15-15 of Fig. 13.
Fig. 16:
   A schematic view showing a configuration of the charger.
Fig. 17:
   A sectional view, similar to Fig. 15, showing a first modification of a structure of mounting a battery in a charger.
Fig. 18:
   A sectional view, similar to Fig. 15, showing a second modification of a structure of mounting a battery in a charger.

Referring first to Fig. 1, there is shown a motor-assisted bicycle of the present invention, which includes a body frame 21 formed in an approximately U-shape in a side view. A front fork 23 is operably supported on a head pipe provided at a front end of the body frame 21. A front wheel W_{F} is rotatably supported on forked ends of the front fork 23. A handlebar 24 is provided on an upper end of the front fork 23. A motor unit 31 having an electric motor 30 is provided on a lower portion of the body frame 21. A pair of right and left rear forked portions 25, 25 extend rearward, downward from the body frame 21 in a space over a rear portion of the motor unit 31 and further extend substantially in the horizontal direction in a space behind the motor unit 31. A rear wheel W_{R} is rotatably supported by the rear fork portions 25, 25 while being put therebetween. A pair of right and left stays 26, 26 are provided between both the rear forked portions 25, 25 and the rear portion of the body frame 21. A seat post 28 having at an upper end thereof a seat 27 is mounted to the rear portion of the body frame 21. Upper and lower positions of the seat 27 are adjustable. A rear carrier 29 is fixedly disposed on the rear side of the seat 27.

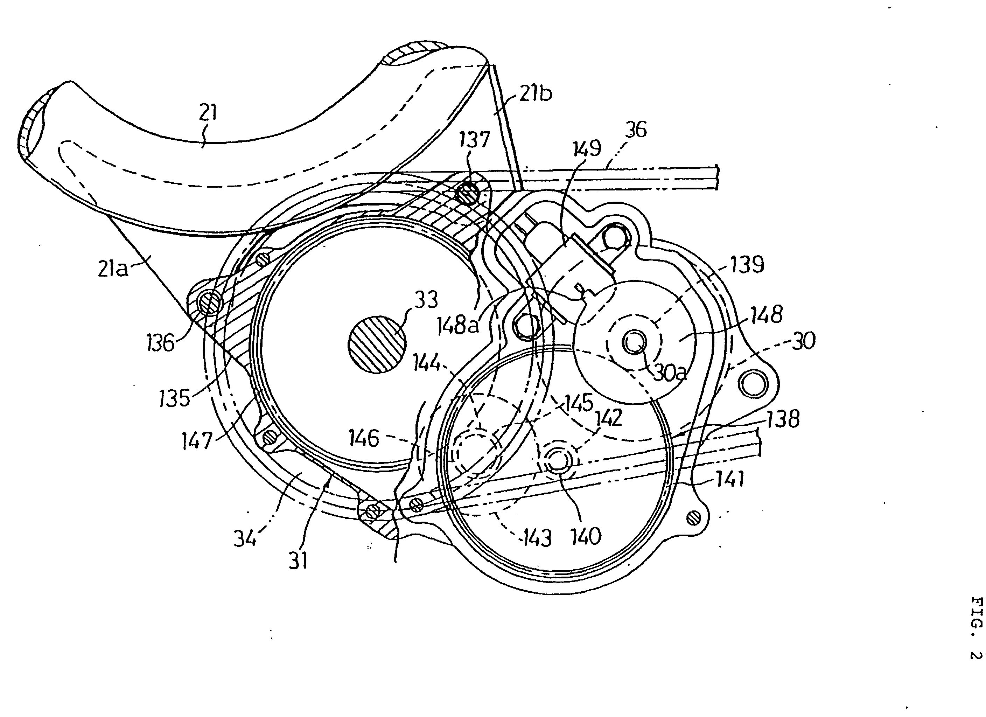

Referring to Figs. 1, 2, a casing 135 of the motor unit 31 is joined, by means of bolts 136, 137, to a pair of hanger portions 21a, 21b provided on a lower portion of the body frame 21. A crank shaft 33 having at both ends thereof crank pedals 32, 32 is rotatably supported by the casing 135. An endless chain 36 is wound around both a drive sprocket 34 and a driven sprocket 35 provided on an axle of the rear wheel W_{R}. The drive sprocket 34 transmits a power from the crank shaft 33, and also receives an assist force from the electric motor 30.

A power transmission system 138 is provided between the electric motor 30 and the drive sprocket 34 in a state being contained in the casing 135. The power transmission system 138 includes a drive gear 139, a first intermediate gear 141, a second intermediate gear 142, a third intermediate gear 143, a second idle shaft 144, a one-way clutch 145, a fourth intermediate gear 146, and a driven gear 147. The drive gear 139 is fixed on a rotating shaft 30a of the electric motor 30. The first intermediate gear 141, which meshes the drive gear 139, is fixed on one end of a first idle shaft 140. The first idle shaft 140 having an axial line parallel to the rotating shaft 30a is rotatably supported by the casing 135. The second intermediate shaft 142 is integrally provided on the first idle shaft 140. The third intermediate gear 143 meshes the second intermediate gear 142. The second idle shaft 144 having an axial line parallel to the first idle shaft 140 is rotatably supported by the casing 135 in such a manner as to be disposed coaxially with the third intermediate gear 143. The one-way clutch 145 is provided between the third intermediate gear 143 and the second idle shaft 144. The fourth intermediate gear 146 is integrally provided on the second idle shaft 144. The driven gear 147 meshes the fourth intermediate gear 146 and is connected to the drive sprocket 34.

In the power transmission system 138, a torque accompanied by operation of the electric motor 30 is decelerated and transmitted to the drive sprocket 34. When the electric motor 30 is stopped, the second idle shaft 144 is allowed to idle by action of the one-way clutch 145, so that rotation of the drive sprocket 34 due to a step-on force of the crank pedals 32, 32 is not obstructed.

Another power transmission system (not shown) is provided between the crank shaft 33 and the drive sprocket 34. The power transmission system includes a torsion bar and a one-way clutch. The torsion bar is twisted depending on an input torque from the input pedals 32, 32. The one-way clutch enables transmission of an input torque, which is generated when the crank shaft 33 is normally rotated by stepping-on of the crank pedals 32, 32, to the drive sprocket 34. The one-way clutch also allows reverse rotation of the crank shaft 33 when the crank shaft 33 is reversely rotated.

The operation of the electric motor 30 is controlled by a controller 37 which is positioned ahead of the motor unit 31 and fixedly supported on a lower portion of the body frame 21 as shown in Fig. 1. The controller 37 controls the operation of the electric motor 30 on the basis of a rotational speed of the electric motor 30 and an input torque of the input pedals 32, 32. As shown fully in Fig. 2, to detect the rotational speed of the electric motor 30, a reluctor 148 having a projection portion 148a on an outer peripheral thereof is fixed on the rotating shaft 30a of the electric motor 30 and an electromagnetic pick-up type sensor 149 for detecting the projecting portion 148a thereby detecting the reluctor 148, that is, the rotational speed of the electric motor 30 is mounted on the casing 135. An input torque of the input pedals 32, 32 is detected by a means (not shown) for detecting a torsional amount of the torsion bar of the power transmission system provided between the crank shaft 33 and the drive sprocket 34.

A front basket 38 is mounted on the head pipe 22. A battery containing case 39, which is disposed on a back surface portion of the basket 38, is also mounted to the head pipe 22. A battery 40 for supplying a power to the electric motor 30 is insertably/removably contained in the battery containing case 39.

Incidentally, most of the body frame 21 is covered with a cover 41. A main switch 42 for supplying a power from the battery 40 to the controller 37 and the electric motor 30 is disposed on an upper portion of the cover 41.

Referring to Figs. 3 to 7 in addition to Figs. 1, 2, a recessed portion 38a is provided in a back surface portion of the basket 38. The battery containing case 39 is disposed on the back surface portion of the basket 38 in such a manner as to be partially contained in the recessed portion 38a.

The battery containing case 39 is configured to insertably/removably mount the battery 40 in such a manner that the battery 40 can be removably inserted in the battery containing case 39 in the vertical direction identical to the direction along which a baggage is removably inserted in the basket 38. The battery containing case 39 includes a containing case main body 44 opened upward for insertably/removably containing the battery 40, and a lid 45 for openably closing the opening portion formed at an upper end of the containing case main body 44. The lid 45 is connected to a back surface portion at the upper end of the containing case main body 44 via a pair of pivots 46, 46.

A forward extending bracket 47 is mounted on the head pipe 22. The containing case main body 44 of the battery containing case 39 is fixedly supported on a supporting frame 48 mounted to the bracket 47. The. basket 38 is fixedly supported by the supporting frame 48 and a pair of mounting stays 49, 49 fastened to the supporting frame 48.

The supporting frame 48 includes an upper supporting lever portion 48a, a lower supporting lever portion 48b, connecting lever portions 48c, 48c, a forward extending portion 48d, a mounting plate portion 48e, upper supporting plate portions 48f, 48f, and a lower supporting plate portion 48g. The upper supporting lever portion 48a extends substantially horizontally in the right and left direction of the body frame 21. The lower supporting lever portion 48b is separated downward from the upper supporting lever portion 48a and extends substantially horizontally in the right and left direction of the body frame 21. The connecting lever portions 48c, 48c connect both ends of the upper and lower supporting lever portions 48a, 48b and extend in the vertical direction. The forward extending portion 48d, which is formed in an approximately U-shape, is continuous at both ends thereof to lower ends of the connecting lever portions 48c, 48c and extend forward for supporting a bottom portion of the basket 38. The mounting plate portion 48e is provided between the upper supporting lever portion 48a and the lower supporting lever portion 48b. The upper supporting plate portions 48f, 48f are provided on connecting portions between both ends of the upper supporting lever portion 48a and the connecting lever portions 48c, 48c. The lower supporting-plate portion 48g is provided at a front end of the forward extending portion 48d. The connecting lever portions 48c, 48c and the forward extending portion 48d are formed by bending one pipe. The upper ends of the connecting lever portions 48c, 48c are welded to both the ends of the upper supporting lever portion 48a formed of one pipe, and both ends of the lower supporting lever portion 48b formed of one pipe are welded to intermediate portions of the connecting lever portions 48c, 48c. The mounting plate portion 48e is fastened to the bracket 47 by two pairs of bolts 50, ..., 50 and nuts 51, ..., 51.

A pair of engagement portions 52, 52 and a pair of stays 53, 53 are integrally provided on the back surface of the containing case main body 44 of the battery containing case 39. Each of the engagement portions 52, 52 is formed in an approximately J-shape so to be engaged from top with the lower supporting lever portion 48b of the supporting frame 48. The mounting stays 53, 53 faces, from the outside, to the upper supporting plate portions 48f, 48f of the supporting frame 48. Each of the above-described mounting stays 49, 49 fastened to the supporting frame 48 is formed in approximately L-shape with a front end portion thereof being bend at right angles. A rear end portion of the mounting stay 49 and the stay 53 of the containing case main body 44 are fastened to each of the upper supporting plate portions 48f, 48f by a pair of screw members 54, 54.

The mounting stays 49, 49 with the rear end portions fastened to the upper supporting plate portions 48f, 48f pass through the containing case main body 44 and extend up to the front side of the containing case main body 44. Specifically, each of a rear wall and a front wall of the containing case main body 44 has a pair of rectangular holes 55, 56, and the mounting stays 49, 49 extend forward through the holes 55, 55 and 56, 56. A back surface of the basket 38 as well as both ends of a cross-member 57 extending between both front end portions of the mounting stays 49, 49 are fastened to the front end portions of the mounting stays 49, 49 by screw members 58, 58. The bottom portion of the basket 38 is fastened to the lower supporting plate portion 48g of the supporting frame 48 by a screw member 59.

Referring to Figs. 8 to 10, the battery 40 includes a battery case 62 and a cell assembly 61 contained in the battery case 62. The cell assembly 61 is composed of a number of Ni-Cd cells 60 connected in series. The battery case 62, which is composed of a front case half 63 and a rear case half 64 connected to the front case half 63, is formed into such a flat, rectangular box-shape as to be vertically insertable in the containing case main body 44 of the battery containing case 39.

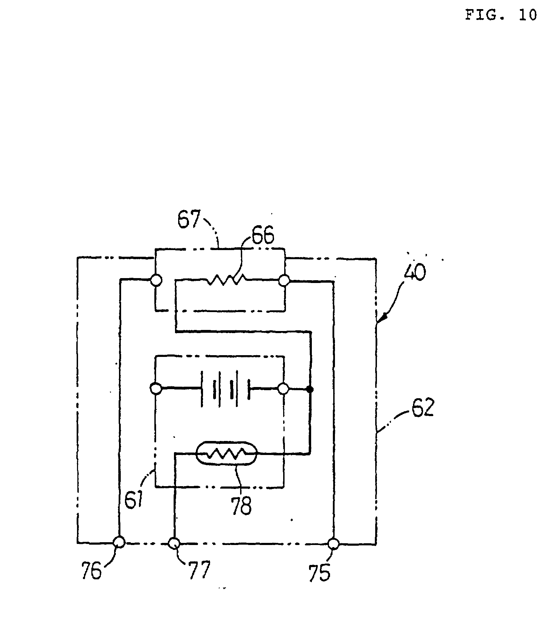

A grasp portion 65 continuous to the rear case half 64 is provided on an upper surface of the battery case 62 in such a manner as to be raised upward at a widthwise central portion of the battery case 62. A residual power indicator 67 containing a shunt resistor 66 (see Fig. 10) is also provided on the upper surface of the battery case 62 at a position offset to one side of the battery case 62 from the grasp portion 65. A push button 68 for operating the residual power indicator 67 is disposed on an upper surface of the residual power indicator 67. The push button 68 is depressed in the vertical direction.

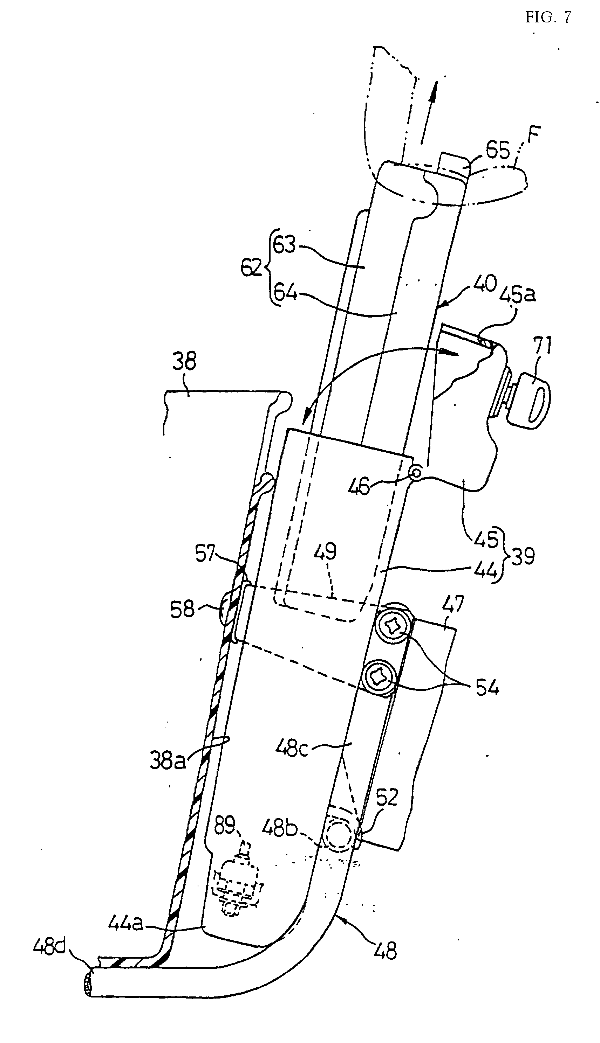

A cutout portion 45a is provided in a front portion of the lid 45 of the battery containing case 39. The cutout portion 45a prevents a finger F grasping the grasp portion 65 of the battery 40 from being caught by the lid 45 when the lid 45 is opened for insertably/removably containing the battery 40 in the battery containing case 39 as shown in Fig. 7. The lid 45 has a window 69 allowing visual observation of the residual power indicator 67 from top and also allowing operation of the push button 68 in a state in which the opening portion formed at the upper end of the containing case main body 44 is closed.

The lid 45 has a locking means 72 to be engaged in a locking hole 73 provided in an upper portion of the front surface side of the containing case main body 44. The engagement of the locking means 72 in the locking hole 73 and the releasing of the engagement are switched each other by a key 71. Thus, after the battery 40 is contained in the containing case main body 44 and the opening portion formed at the upper end of the containing case main body 44 is closed by the lid 45, the lid 45 can be locked by the locking means 72. An elastic member 74 is stuck on an inner surface of the lid 45. When the battery 40 is contained in the containing case main body 44 and then the opening portion formed at the upper end of the containing case main body 44 is closed by the lid 45, the elastic member 74 is brought in contact with the grasp portion 65 of the battery 40 and thereby the battery 40 is elastically held in the battery containing case main body 39. This makes it possible to effectively absorb vibration of the battery 40 in the battery containing case main body 39 in a running state and to keep a stable connection between the battery 40 and discharging terminals 89, 90 which will be described later.

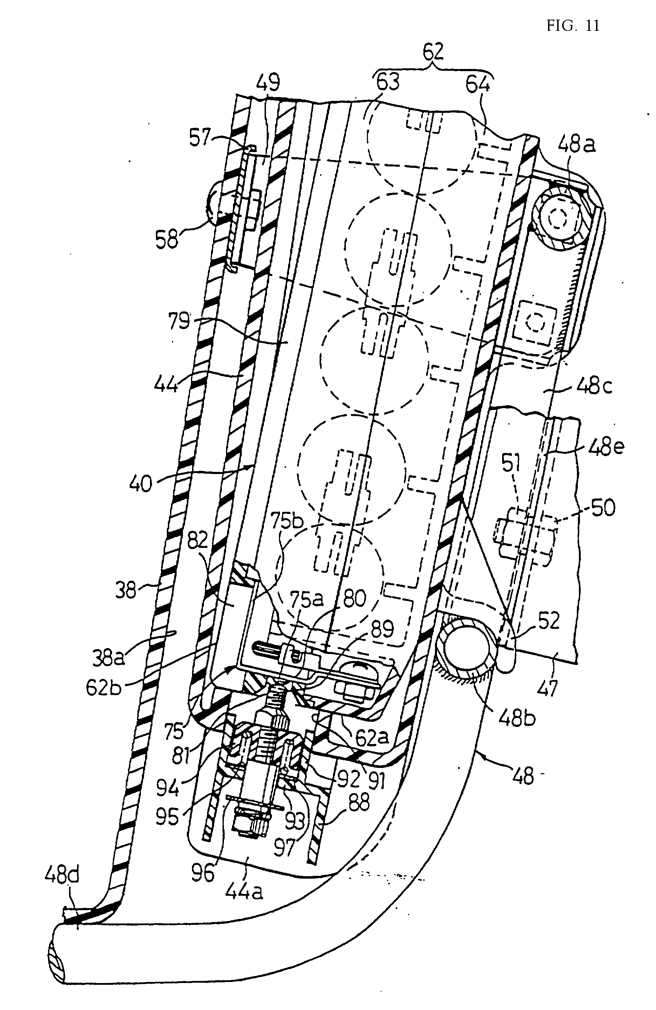

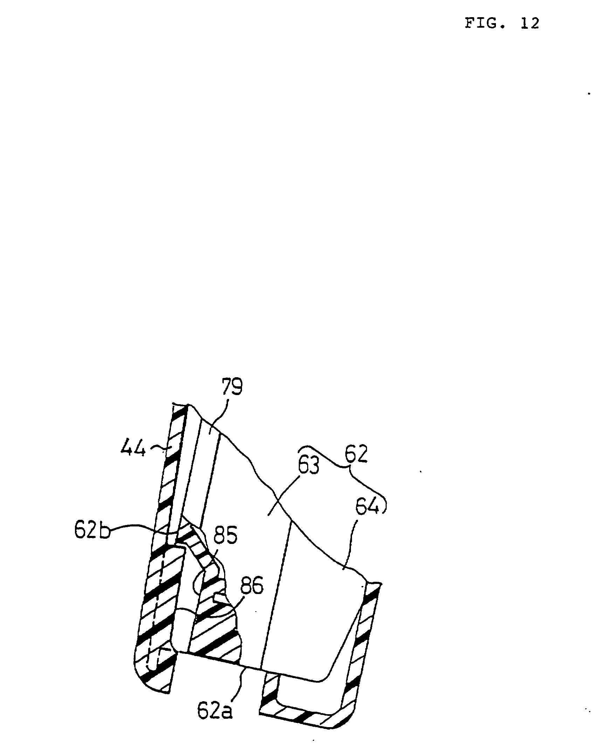

Referring to Figs. 11 and 12, in addition to the previous figures, the battery 40 includes first to third connecting terminals 75, 76, 77. The first connecting terminal 75 is connected to a minus terminal side of the cell assembly 61 through the shunt resistor 66. The second connecting terminal 76 is connected to a plus terminal side of the cell assembly 61. The third connecting terminal 77 is connected to the minus terminal side of the cell assembly 61 through a thermistor 78 for detecting a temperature of the cell assembly 61.

A vertically extending guide portion 79 is provided on the front surface side, that is, on the front case half 63 of the battery case 62 of the battery 40 in such a manner as to project forward from a widthwise central portion of the front case half 63. The connecting terminal 75, 76, 77 are disposed in the battery case 62 at a corner portion at which a bottom wall surface 62a of the battery case 62 crosses a front wall surface of the guide portion 79, that is, a front wall surface 62b of the battery case 62.

The first connecting terminal 75, which is formed into an approximately L-shape having a relatively wide width, has a flat-shaped terminal plate 80, a discharging contact 75a, and a flat-shaped charging contact 75b. The terminal plate 80 is brought in elastic-contact with an inner surface of the bottom portion of the battery case 62 with a rear end side thereof fixed. The discharging contact 75a is joined to a lower surface of the terminal plate 80 by rivetting. The charging contact 75b is continuous to a front end of the terminal plate 80 in such a manner as to be bent at right angles therefrom, and it is brought in elastic-contact with an inner surface of the front portion of the battery case 62. The discharging contact 75a is made of silver, and the charging contact 75b is subjected to nickel (or silver) plating.

The first connecting terminal 75 is disposed at a position corresponding to one side of the guide portion 79 in the width direction. The bottom wall of the battery case 62 has a circular opening portion 81 through which the discharging contact 75a faces to the bottom wall surface 62a. The guide portion 79 has a slit 82 through which the charging contact 75b faces to the front wall surface 62b. The slit 82 extends longer in the vertical direction with an upper end thereof closed and an upper end thereof opened.

The second connecting terminal 76 has a discharging contact 76a and a charging contact 76b, and is formed into an approximately L-shape similar to but narrower in width than that of the first connecting terminal 75. The second connecting terminal 76 is disposed at a position corresponding to the other side of the guide portion 79 in the width direction. The bottom wall of the battery case 62 has a circular opening portion (not shown) through which the discharging contact 76a faces to the bottom wall surface 62a. The guide portion 79 has a slit 83 through which the charging contact 76b faces to the front wall surface 62b. The slit 83 extends longer in the vertical direction with an upper end thereof closed and a lower end thereof opened.

The third connecting terminal 77 is formed into an approximately L-shape similarly to the first connecting terminal 75 and the second connecting terminal 76, but it has not any contact facing to the bottom wall surface 62a of the battery case 62. The third connecting terminal 77 is disposed in the battery case 62 at a position between the first connecting terminal 75 and the second connecting terminal 76. The guide portion 79 has a slit 84 through which the third connecting terminal 77 faces to the front wall surface 62b. The slit 84 extends longer in the vertical direction with an upper end thereof closed and a lower end thereof opened.

Guide grooves 85, 85 are provided between the slits 82, 84 and between the slits 83, 84. Each of the guide grooves 85, 85 extends longer in the vertical direction with an upper end thereof closed and an upper end thereof opened. Fitting projecting portions 86, ..., 86 are provided on a lower portion of the guide portion 79 on the inner surface side. The fitting projecting portions 86, ..., 86 are fitted from bottom into the guide grooves 85, 85 for positioning the battery 40 in the containing case main body 44 in the width direction.

A terminal box 88 is mounted on the bottom portion of the containing case main body 44. The terminal box 88 contains a first discharging terminal 89 and a second discharging terminal 90. The first discharging terminal 89 is connected to the discharging contact 75a of the first connecting terminal 75 of the battery 40 contained in the battery containing case 39. The second discharging terminal 90 is connected to the discharging contact 76a of the second connecting terminal 76 of the battery 40.

The bottom portion of the containing case main body 44 has an opening portion 91 corresponding to the opening portion 81. The opening portion 81 is, as described above, formed in the bottom wall of the battery case 62 at a position corresponding to that of the discharging contact 75a of the first connecting terminal 75. The terminal box 88 is provided with a terminal supporting portion 92 formed into a bottoming cylinder shape. An upper end portion of the terminal supporting portion 92 is fitted in the opening portion 91, and a lower end portion thereof has an end plate 93. The first discharging terminal 89, which is formed into a rod shape, axially movably passes through the end plate 93 and is coaxially disposed in the terminal supporting portion 92. A retainer 94 slidably fitted in the terminal supporting portion 92 is fixed to an intermediate portion of the first discharging terminal 89. A spring 95 is contractedly provided between the retainer 94 and a washer 97 being in contact with an-inner surface of the end plate 93. The upper end of the first discharging terminal 89 is thus elastically biased in the direction along which it comes in contact with the discharging contact 75a of the first connecting terminal 75. On the other hand, a snap ring 96 is fitted around the lower end portion of the first discharging terminal 89. The snap ring 96 is brought in contact with a lower surface of the end plate 93 and thereby restricts the upper movement of the first discharging terminal 89.

The above structure of disposing the first discharging terminal 89 into the terminal box 88 has the following advantage. Namely, when the battery 40 is contained in the containing case main body 44, the upper end of the first discharging terminal 89 is brought in elastic-contact with the discharging contact 75a of the first connecting terminal 75, so that the contact between the discharging contact 75a and the first discharging terminal 89 can be effectively kept even when the battery 40 is vibrated during running of the bicycle.

The second discharging terminal 90 is disposed in the terminal box 88 in the same manner as that for the first discharging terminal 89. Namely, when the battery 40 is contained in the containing case main body 44, the upper end of the second discharging terminal 90 is brought in elastic-contact with the discharging contact 76a of the second connecting terminal 76, so that the contact between the discharging contact 76a and the second discharging terminal 90 can be effectively kept even when the battery 40 is vibrated during running of the bicycle.

The first and second discharging terminals 89, 90 are connected to respective cords for supplying a power to the electric motor 30. These cords are led from the terminal box 88. To cover both sides of the terminal box 88 for preventing the terminal box 88 from being viewed from the exterior, cover portions 44a, 44a extending downward are integrally provided on both sides of the lower end of the containing case main body 44, thereby giving a preferable appearance.

Referring to Figs. 13 to 15, there is shown a charger 100 for charging the battery 40 having taken out from the battery containing case 39. The charger 100 can removably mount the battery 40 in the same direction as the direction along which the battery 40 is insertably/ removably contained in the battery containing case 39, that is, in the vertical direction.

A main body 101 of the charger 100, which is placed on a flat floor surface 99, is formed from a synthetic resin into an approximately rectangular box-shape being narrower in width than the battery 40. The main body 101 has a low level portion 102 having a relatively low level from the floor surface 99, and a high level portion 103 having a level higher than the low level portion 102 and continuous to the low level portion 102.

The high level portion 103 has a mounting groove 107 opened upward and sideward. The mounting groove 107 is surrounded by a vertical extending side surface 104 positioned on the low level portion 102 side, a vertical extending side surface 105 positioned opposite to the side surface 104, and a horizontal bottom surface 106 connecting both lower ends of the side surfaces 104, 105 to each other. The mounting groove 107 is designed to allow the battery 40 to be mounted from top into the mounting groove 107. More specifically, the size of the bottom surface 106 of the mounting groove 107 is set such that the push button 68 of the residual power indicator 67 disposed on the upper surface of the battery 40 is located at least at a position corresponding to the bottom surface 106 when the battery 40 is mounted in the mounting groove 107.

The side surfaces 104, 105 of the mounting groove 107 are formed into a tapered shape as seen from top for allowing easy mounting of the battery 40 in the mounting groove 107. A pair of ribs 108, 108 extending longer in the vertical direction are projectingly provided on a lower portion of the side surface 104 which faces to the front surface of the battery 40 when the battery 40 is mounted in the mounting grooves 107. The ribs 108, 108 are brought in contact with the front surface of the battery 40 on both the sides of the guide portion 79 formed on the front surface of the battery 40. A plurality of (for example, three pieces) of ribs 109, ..., 109 are projectingly provided on the side surface 105 which faces to the rear surface of the battery 40 when the battery 40 is mounted in the mounting groove 107. The ribs 109, ..., 109 extends between upper and lower ends of the side surface 105 and can be brought in contact with the rear surface of the battery 40. The ribs 108, ..., 108 and 109, ..., 109 are formed into a tapered shape as seen from top just as the side surfaces 104, 105. Tilting angles of the ribs 108, ..., 108 and 109, ..., 109, however, are set to be smaller than those of the side surfaces 104, 105. The tilting of the side surfaces 104, 105 and the ribs 108, ..., 108 and 109, ..., 109 allows easy mounting/dismounting of the battery 40 into/from the mounting groove 107. Also, the front and rear surfaces of the battery 40 are effectively supported by the ribs 108, ..., 108 and 109, ..., 109 tilted at the tilting angles smaller than those of the side surfaces 104, 105, so that the battery 40 in the mounting groove 107 can be prevented from being loosened back and fourth. A guiding recessed portion 110 opened upward is provided in the side surface 104. The guide portion 79 projectingly provided on the battery case 62 of the battery 40 can be removably inserted from top into the guiding recessed portion 110. Both side surfaces 110a, 110a of an upper portion of the guiding recessed portion 110 are formed into a tapered shape as seen from top for allowing easy insertion of the guide portion 79 into the guiding recessed portion 110.

Fitting projecting portions 111, 111 are projectingly provided on an inner surface of the guiding recessed portion 110. The fitting projecting portions 111, 111 are fitted in the guide grooves 85, 85 formed in the front surface portion of the battery 40. The battery 40 in the mounting groove 107 can be prevented from being loosened in the axial direction by fitting of the fitting projecting portions 111, 111 in the guide grooves 85, 85.

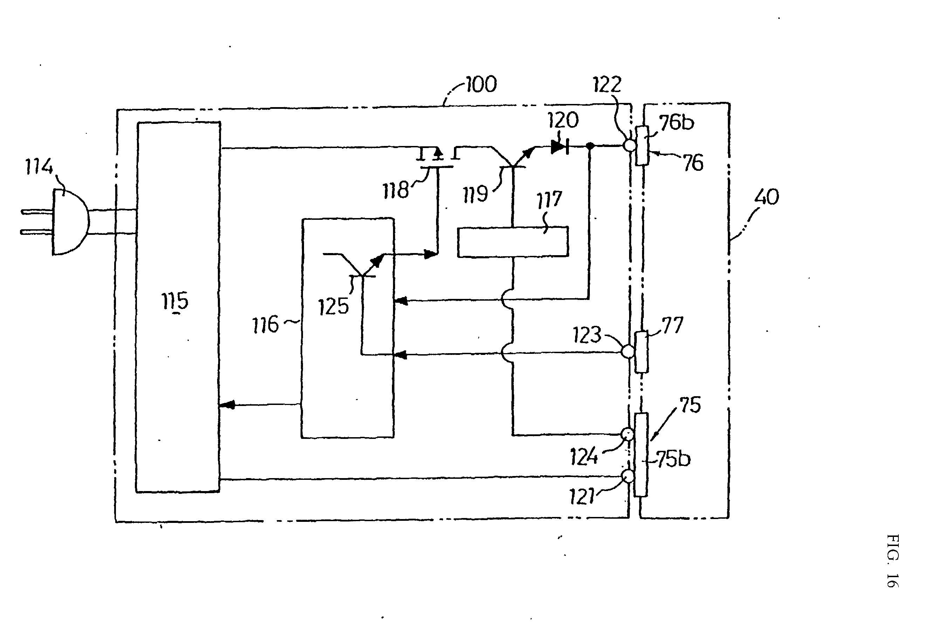

Referring to Fig. 16, the charger 100 includes a power supply circuit 115 connected to an A. C. power supply through a connector 114, a control circuit 116 composed of a microcomputer, a drive circuit 117, a MOS-FET 118, a transistor 119, a diode 120, and the like.

A first charging terminal 121 is connected to one end of the power supply circuit 115. A second charging terminal 122 is connected to the other end of the power supply circuit 115 through the MOS-FET 118, transistor 119 and diode 120. The control circuit 116 has a transistor 125 connected to a gate of the MOS-FET 118, and a base of the transistor 125 is connected to a thermistor terminal 123. A control signal for switching a current is supplied from the control circuit 116 to the power supply circuit 115, and a voltage signal of the second charging terminal 122 is inputted in the control circuit 116. An output terminal of the drive circuit 117 is connected to a base of the transistor 119 for controlling operation/cutoff of the transistor 119. A battery detecting terminal 124 is connected to an input terminal of the drive circuit 117.

A substrate 113 is contained in the main body 101 at a position sideward from the lower portion of the battery 40 mounted in the mounting groove 107. More specifically, the substrate 113 is contained both in the low level portion 102 and in part of the high level portion 103 on the low level portion 102 side from the mounting groove 107. The electric parts shown in Fig. 16 are mounted on the substrate 113. Since the substrate 113 is contained in the main body 101 at a position sideward from the lower portion of the battery 40 mounted in the mounting groove 107, the mounting position of the battery 40 in the charger 100 can be made as low as possible. This makes it possible to stabilize the mounting state of the battery 40 in the charger 100.

Projecting portions 126, 127, 128 are provided on the lower portion of the guiding recessed portion 110 provided in the side surface 104 of the mounting groove 107. The projecting portions 126, 127, 128 are fitted in the slots 82, 83, 84 formed in the front surface portion of the battery 40, respectively. Each of the first charging terminal 121 and the battery detecting terminal 124 is formed of a wire. Bent portions of both the terminals 121, 124 project from an opening portion 129 provided in the projecting portion 126 in order that they are elastically brought in sliding-contact with the charging terminal 75b of the first connecting terminal 75 when the battery 40 is mounted in the mounting groove 107. The second charging terminal 122 formed of a wire projects from the projecting portion 127 in order that it is elastically brought in sliding-contact with the charging terminal 76b of the second connecting terminal 76 when the battery 40 is mounted in the mounting groove 107. The thermistor terminal 123 formed of a wire projects from the projecting portion 128 in order that it is elastically brought in sliding-contact with the third connecting terminal 77 when the battery 40 is mounted in the mounting groove 107.

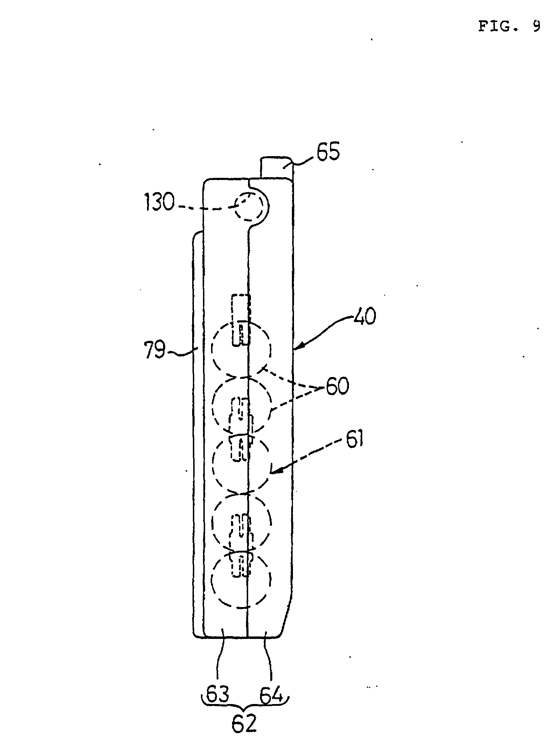

The description has been made of the example where the charging of the battery 40 is performed in the state that the battery 40 is mounted in the charger 100; however, in some cases, the charging of the battery 40 is required to be performed in a state that the battery 40 is connected to a connector connected to a D. C. power supply. In consideration of such a case, as shown by a broken line of Fig. 9, a recessed portion 130 may be previously in an inner side surface of an upper portion of the battery case 62 of the battery 40 for making easy formation of an opening portion. Thus, as shown by a chain line of Fig. 8, a connector 131 can be provided in the battery case 62 at a position corresponding to the recessed portion 130.

The function of the first embodiment will be described below. The battery containing case 39 is fixedly disposed on the back surface portion of the front basket 38 and the battery 40 is insertably/removably contained in the battery containing case 39 in the vertical direction. As a result, it becomes possible to extremely easily perform mounting/dismounting of the battery 40 into/from the motor-assisted bicycle just as insertion/removal of a baggage into/from the front basket 38.

The residual power indicator 67 is provided on the upper surface of the battery case 62 of the battery 40 and the window 69 allowing visual observation of the residual power indicator 67 from top is provided in the lid 45 of the battery containing case 39. As a result, the rider can easily visually observe the residual power indicator 67 and easily confirm the residual power of the battery 40 even in a state in which he sits on the seat 27. The residual power is indicated on the residual power indicator 67 only when the push button 68 is depressed. Accordingly, the residual power indicator 67 does not waste power and also it does not obstruct the view of the rider during running of the bicycle.

The first and second connecting terminals 75, 76 provided on the battery 40 are commonly used for charging and discharging. Consequently, as compared with a battery provided with connecting terminals specialized for charging and discharging, the number of parts can be reduced and the wiring structure in the battery case 62 can be simplified.

A current flowing upon discharging the battery 40, that is, upon feeding a power to the electric motor 30 is relatively large, while a current flowing upon charging the battery 40 is relatively small. Accordingly, in the case where discharging terminals and charging terminals are electrically connected to the same portions of the first and second connecting terminals 75, 76, electric capacitances of both the connecting terminals 75, 76 must be set at larger values and also electric capacitances of charging terminals of the charger 100 must be set at larger values. However, according to this embodiment, since the discharging contacts 75a, 76a connected to the first and second discharging terminals 89, 90 are disposed on the first and second connecting terminals 75, 76 at positions different from those at which the charging contacts 75b, 76b connected to the first and second charging contacts 121, 122 are disposed, and consequently, even when the first and second connecting terminals 75, 76 are commonly used for charging and discharging, they can satisfy electric characteristics necessary for charging and discharging. Specifically, upon discharging the battery 40 in which a large current flows, the discharging contacts 75a, 76a composed of silver contacts are brought in elastic-contact with the first and second discharging terminals 89, 90 in the same pressing direction, so that it is possible to reduce a wear due to the contact therebetween and hence to cope with a large-current flowing condition. On the other hand, upon charging the battery 40 the battery 40 in which a small current flows, the first and second charging terminals 121, 122 formed of wires wipe the charging contacts 75b, 76b upon insertion of the battery 40 to clean dust adhering on the surface of the charging contacts 75b, 76b, so that it is possible to prevent occurrence of contact failure and hence to cope with a small-current flowing condition.

The discharging contacts 75a, 76a of the first and second connecting terminals 75, 76 are disposed in such a manner as to face to the bottom wall surface 62a of the battery case 62 of the battery 40 while the charging contacts 75b, 76b are disposed in such a manner as to face to the front wall surface 62b perpendicular to the bottom wall surface 62a, and accordingly, it is possible to prevent occurrence of connection error upon charging and discharging.

The battery 40 is mounted in the charger 100 in the same direction as the direction along which it is insertably/removably contained in the battery containing case 39 mounted on the vehicle, that is, in the vertical direction, and the battery 40 is charged by mounting of the battery 40 in the charger 100. This makes it possible to eliminate a connecting work upon charging and hence to make easy the charging work.

The terminals 121 to 124 are disposed on the side surface 104 which is a wall surface different from a wall surface applied with a dead weight of the battery 40 when the battery 40 is mounted in the charger 100, that is, the bottom surface 106 of the mounting groove 107, and they are connected to the charging contacts 75b, 76b and the third connecting terminal 77 facing to the front surface side of the battery 40. Accordingly, it is possible to prevent the terminals 121 to 124 from being applied with the relatively heavy dead weight of the battery 40 and hence to reduce the weights and sizes of the terminals 121 to 124 of the charger 100.

The residual power indicator 67, which is provided on the upper surface of the battery 40, can be visually observed from top when the battery 40 is mounted in the charger 100. Further, since the push button 68 for operating the residual power indicator 67 can be operated in the vertical direction, it is possible to prevent the terminal 121 to 124 from being applied with any force in the contact releasing direction by the operation of the push button 68.

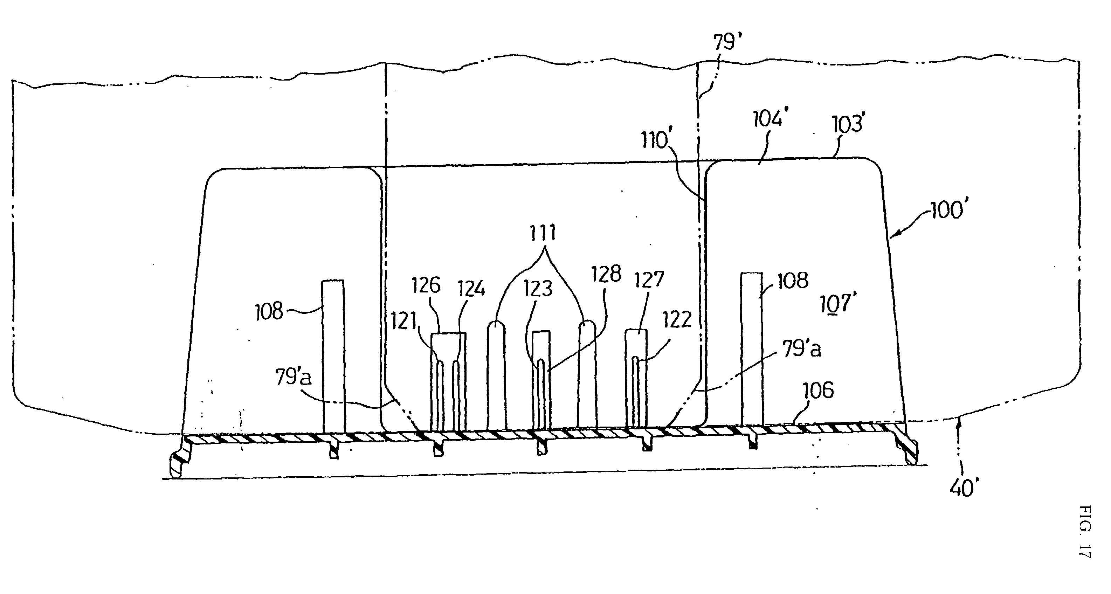

Fig. 17 shows a first modification of the structure of mounting a battery in a charger. A guide recessed portion 110' opened upward is provided in one side surface 104' of a mounting groove 107' provided in a high level portion 103' of a charger 100'. The guide recessed portion 110' allows a guide portion 79' provided on a front surface of the battery 40' to be insertably/removably guided in the guide recessed portion 110'. Both side surfaces 79'a, 79'a of a leading end portion of the guide portion 79' are tapered downward for allowing easy insertion of the guide portion 79' in the guide recessed portion 110'.

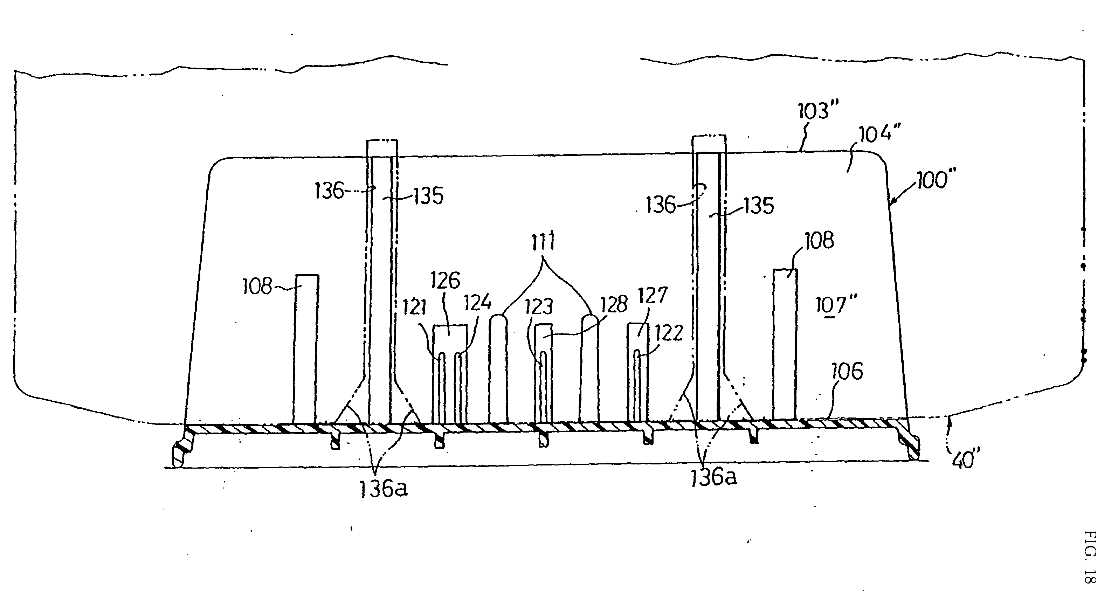

Fig. 18 shows a second modification of the structure of mounting a battery into a charger. A pair of guiding projecting portions 135, 135 extending in the vertical direction are provided on one side surface 104'' of a mounting groove 107" provided in a high level portion 103" of a charger 100". A pair of guiding recessed portion 136, 136 with upper ends closed and lower ends opened are provided in a surface portion, opposed to the side surface 104", of a battery 40" to be mounted in the mounting groove 107''. The guiding projecting portion 135, 135 are fitted in the guiding recessed portions 136, 136. Both side surfaces 136a, 136a of lower end portions of the guiding recessed portions 136, 136 are tapered downward for allowing easy fitting of the guiding projecting portions 135, 135 in the guiding recessed portions 136, 136.

In summary, it is a subject to provide a battery removably mounted on a motor-assisted bicycle and containing a discharging contact used for feeding a current to an electric motor and a charging contact used for charging the battery by a charger, which is capable of making easy electric connection when the relatively large sized battery is mounted on the motor-assisted bicycle, and of easily charging the battery removed from the motor-assisted bicycle at a relatively narrow location.

Therefore, a discharging terminal to be brought in contact with a discharging contact 75a of a battery 40 by the dead weight of the battery 40 is provided on a battery containing case. A charging contact 75b is provided on the battery 40 in such a manner as to face in the direction different from the facing direction of the discharging contact 75a. A charger 100 is configured to insertably/removably mount the battery 40 in the same direction along which the battery 40 is removably inserted in the battery containing case. A charging terminal 121 making electric contact with the charging contact 75b when the battery 40 is mounted in the charger 100 is provided on the charger 100.

While the preferred embodiments of the present invention have been described, such description is for illustrative purposes only, and it is to be understood that many changes in design can be made without departing from the scope of the present invention described in the claims.

## Claims

1. A discharging/charging structure comprising a battery, a battery containing case and a charger, said battery removably mounted on a motor-assisted bicycle, and including discharging contacts (75a, 76a) used for feeding a current to an electric motor (30) and charging contacts (75b, 76b) used for charging said battery by said charger (100, 100', 100"), **characterized in that**
said battery containing case (39) for insertably/removably containing a battery (40, 40', 40") in the vertical direction is provided on said motor-assisted bicycle;
discharging terminals (89, 90) are provided on said battery containing case (39) in such a manner as to be brought in contact with said discharging contacts (75a, 76a) disposed on said battery (40, 40', 40") by the dead weight of said battery (40, 40', 40"), said discharging contacts (75a, 76a) facing downward;
charging contacts (75b, 76b) are provided on said battery (40, 40', 40"), said charging contacts (75b, 76b) facing in the direction different from the facing direction of said discharging contacts (75a, 76a);
said charger (100, 100', 100") is configured to insertably/removably mount said battery (40, 40', 40") in the same direction as that along which said battery (40, 40', 40") is insertably/removably contained in said battery containing case (39); and
charging terminals (121, 122) making electric contact with said charging contacts (75b, 76b) when said battery (40, 40', 40") is mounted in said charger (100, 100', 100"), are provided on said charger (100, 100', 100'').

2. A discharging/charging structure according to claim 1, wherein a residual power indicator (67) is provided on an upper surface of said battery (40, 40', 40").

3. A discharging/charging structure according to claim 2, wherein a push button (68) for operating said residual power indicator (67) is disposed on said residual power indicator (67) with the operating direction of said push button (68) taken as the vertical direction.

## Patentansprüche

1. Ent-/Aufladungsaufbau für eine Batterie (40), wobei die Batterie (40) ein Gehäuse (135) und ein Ladegerät (100) aufweist, die Batterie (40) an einem Fahrrad mit Hilfsmotor entnehmbar befestigt ist und Entladekontakte (75a, 76a) aufweist, die zum Zuführen von Strom zu einem elektrischen Motor (30) verwendet werden, und Ladekontakte (75b, 76b) aufweist, die zum Laden der Batterie (40) mit dem Ladegerät (100, 100', 100'') verwendet werden, **dadurch gekennzeichnet, daß**
- das Batterieaufnahmegehäuse (39) zum einsetzbaren/entnehmbaren Aufnehmen einer Batterie (40, 40', 40") in der vertikalen Richtung an dem Fahrrad mit Hilfsmotor ausgestattet ist;
- Entladeanschlüsse (89, 90) an dem Batterieaufnahmegehäuse (39) so angeordnet sind, daß sie durch das Eigengewicht der Batterie (40, 40', 40") mit den an der Batterie (40, 40', 40") angeordneten Entladekontakten (75a, 76a) in Kontakt gebracht werden, wobei die Entladekontakte (75a, 76a) nach unten ausgerichtet sind;
- Ladekontakte (75b, 76b) an der Batterie (40, 40', 40") angeordnet sind, die Ladekontakte (75b, 76b) in die andere Richtung als die Richtung der Ladekontakte (75a, 76a) ausgerichtet sind;
- das Ladegerät (100, 100', 100") ausgelegt ist, die Batterie (40, 40', 40") in der gleichen Richtung einsetzbar/entnehmbar einzusetzen wie jenes, bei welchem die Batterie (40, 40', 40") einsetzbar/entnehmbar in dem Batterieaufnahmegehäuse (39) enthalten ist; und
- Ladeanschlüsse (121, 122) an dem Ladegerät (100, 100', 100") angeordnet sind, die elektrischen Kontakt mit den Ladekontakten (75b, 76b) herstellen, wenn die Batterie (40, 40', 40") in das Ladegerät (100, 100', 100") eingesetzt wird.

2. Ent-/Aufladungsaufbau nach Anspruch 1, wobei ein Restenergieanzeiger (67) an einer oberen Fläche der Batterie (40, 40', 40") angeordnet ist.

3. Ent-/Aufladungsaufbau nach Anspruch 2, wobei ein Tastschalter (68) zum Einschalten des Restkraftanzeigers (67) an dem Restkraftanzeiger (67) mit der Betätigungsrichtung des Tastschalters (68) in vertikaler Richtung angeordnet ist.

## Revendications

1. Structure de décharge/charge comprenant une batterie, un boîtier contenant la batterie et un chargeur, ladite batterie montée amovible sur une bicyclette à moteur auxiliaire, et comportant des contacts de décharge (75a, 76a) utilisés pour alimenter en courant un moteur électrique (30) et des contacts de charge (75b, 76b) utilisés pour charger ladite batterie par ledit chargeur (100, 100', 100"), **caractérisée en ce que**
ledit boîtier (39) contenant la batterie servant à contenir avec possibilité de mise en place et de retrait une batterie (40, 40', 40") dans la direction verticale est monté sur ladite bicyclette à moteur auxiliaire;
des bornes de décharge (89, 90) sont placées sur ledit boîtier (39) contenant la batterie de manière à être mises en contact avec lesdits contacts de décharge (75a, 76a) placés sur ladite batterie (40, 40', 40'') par le poids mort de ladite batterie (40, 40', 40''), lesdits contacts de décharge (75a, 76a) étant dirigés vers le bas ;
des contacts de charge (75b, 76b) sont placés sur ladite batterie (40, 40', 40"), lesdits contacts de charge (75b, 76b) étant dirigés dans la direction différente de la direction d'orientation desdits contacts de décharge (75a, 76a);
ledit chargeur (100, 100', 100") est configuré pour mettre en place/retirer ladite batterie (40, 40', 40") dans la même direction que celle suivant laquelle ladite batterie (40, 40', 40") est contenue avec possibilité de mise en place/retrait dans ledit boîtier (39) contenant la batterie; et
des bornes de charge (121, 122) faisant contact électrique avec lesdits contacts de charge (75b, 76b) lorsque ladite batterie (40, 40', 40") est montée dans ledit chargeur (100, 100', 100"), sont placées sur ledit chargeur (100, 100', 100").

2. Structure de décharge/charge selon la revendication 1, dans laquelle un indicateur (67) d'énergie résiduelle est placé sur une surface supérieure de ladite batterie (40, 40', 40").

3. Structure de décharge/charge selon la revendication 2, dans laquelle un bouton-poussoir (68) pour faire fonctionner ledit indicateur (67) d'énergie résiduelle est placé sur ledit indicateur (67) d'énergie résiduelle, la direction d'actionnement dudit bouton-poussoir (68) étant la direction verticale.
